# EUROPÄISCHE PATENTSCHRIFT

(11) **EP 1 874 573 B1**
(45) Veröffentlichungstag und Bekanntmachung des Hinweises auf die Patenterteilung: **30.09.2015**
(21) Anmeldenummer: 06705838.8
(22) Anmeldetag: 23.01.2006
(51) Int. Cl.: B60J 7/00

(54) **VERDUNKELUNGSVORRICHTUNG FÜR LICHTDURCHLÄSSIGE SCHEIBEN VON KRAFTFAHRZEUGEN**
SUNSHADE FOR TRANSPARENT PANES OF MOTOR VEHICLES
DISPOSITIF D'OBSCURCISSEMENT POUR VITRES TRANSPARENTES DE VEHICULES AUTOMOBILES

(30) Priorität: 21.01.2005 FR 0500617
(43) Veröffentlichungstag der Anmeldung: 09.01.2008
(73) Patentinhaber: Webasto SE, 82131 Stockdorf (DE)
(72) Erfinder: ALBERT, Jean-Paul, c/o Omnipat, F-13100 Aix-en-Provence (FR)
(74) Vertreter: Epping - Hermann - Fischer
(86) Internationale Anmeldenummer: PCT/DE2006/000100
(87) Internationale Veröffentlichungsnummer: WO 2006/076906

(56) Entgegenhaltungen:
- EP-A2- 0 875 407
- DE-C1- 4 326 547
- DE-U1-202004 018 915
- FR-A1- 2 851 200
- US-A- 3 249 973
- US-A- 4 923 244
- US-A- 5 186 517

## Beschreibung

Die vorliegende Erfindung betrifft eine Vorrichtung, die dazu bestimmt ist, mit dem Dach eines Kraftfahrzeuges verbunden zu werden, um eine lichtdurchlässige, ihrerseits im Dach der Karosserie des genannten Fahrzeuges karosseriefest montierte Scheibe abdunkeln zu können.

Es ist an sich bekannt, dass das Dach eines Kraftfahrzeuges zumindest teilweise aus einer lichtdurchlässigen Scheibe, d. h. also einer transparenten oder durchscheinenden Scheibe, bestehen kann. Die genannte Scheibe, die im Allgemeinen aus Glas ausgeführt wird, ist in der Weise dimensioniert bzw. ausgeformt, dass sie eine in dem Dach des Kraftfahrzeuges angebrachte Öffnung zu verschließen vermag. Genauer gesagt ist die Öffnung durch einen Falz begrenzt, welcher die periphere Kante der Scheibe aufzunehmen vermag. In an sich bekannter Weise erfolgt die Montage vorteilhafterweise durch Kleben.

In der Praxis wird diese Art von mehr oder weniger transparentem Dach stets in Verbindung mit einer Lichtabdunkelung eingesetzt, die geeignet ist, parallel zur Innenfläche der Glasscheibe ausgefahren zu werden. Die Aufgabe einer solchen Verdunkelungsvorrichtung ist es, zu verhindern, dass Lichtstrahlen, die durch die Glasscheibe eindringen, sich im Innenraum des Fahrgastraums ausbreiten. Ziel ist dabei natürlich, den Treibhauseffekt im Inneren des Kraftfahrzeuges insbesondere an Tagen mit starker Sonneneinstrahlung zu begrenzen. Es wird daran erinnert, dass eine Abdunkelung bekannterweise aus Verdunkelungsmitteln beliebiger bekannter Art besteht, die für die Verschiebung zwischen einer offenen und einer geschlossenen Position beweglich montiert sind. Die Verdunkelungsmittel können also beispielsweise durch eine oder mehrere im Wesentlichen steife Klappen oder durch einen Vorhang mit Aufrollvorrichtung gebildet werden. Das Ganze ist jedenfalls in der Weise ausgestaltet, dass die Verdunkelungsmittel in der offenen Position in Aufnahmemitteln enthalten sind, die in direkter Nähe der Öffnung angeordnet sind, und zumindest mit ihrem größten Teil außerhalb des Raums angeordnet sind, der unter dem nutzbaren Teil der Scheibe liegt, d. h. also des Teils, der im Bereich der genannten Öffnung angeordnet ist. In geschlossener Position ist die Ausgestaltung im Übrigen so, dass die Verdunkelungsmittel in der Lage sind, über Führungsmittel parallel zur Innenfläche der Glasscheibe und insbesondere unter dem vorstehend definierten nutzbaren Teil ausgefahren zu werden.

Das Dokument US 4923244 A offenbart eine Sonnendach Konstruktion für ein Kraftfahrzeug, die eine Verdunkelungsvorrichtung und Befestigungsmittel umfasst, die eine Verbindung durch Einzuclipsen ermöglichen.

In dem Dokument US 5186517 A wird eine Befestigungsanordnung beschrieben, die für eine Installation von Fahrzeugkomponenten geeignet ist. Dabei wird ein Befestigungselement in einer Ausführungsform eines Druckknopfes offenbart, der mit einer zu befestigenden Fahrzeugkomponente fest verbunden ist.

Die Druckschrift EP 0875407 A2 beschreibt eine Halterung für eine Fahrzeug-Sonnenblende für eine Frontscheibe eines Fahrzeugs. Die Fahrzeug-Sonnenblende wird mittels zweier Verriegelungselemente an einer Fahrzeug-Tragstruktur befestigt.

In dem Dokument FR 2851200 A1 wird eine Rolloanordnung für eine Heckscheibe eines Kraftfahrzeugs offenbart, die ein Gehäuse, zwei Greifelemente und zwei Befestigungsmittel umfasst. Die Befestigungsmittel sind in diesem Zusammenhang dazu ausgebildet, sich von einer Seite in das Material des Gehäuses einzuhaken und sich von einer anderen Seite an den Greifelementen einzuclipsen.

Das Dokument US 3249973 A beschreibt ein Befestigungselement, das in Form eines Druckknopfes ausgebildet ist. Der Druckknopf kann in eine entsprechende Öffnung eines Verkleidungselements eingeclipst werden und im weiteren Verlauf wird das Verkleidungselement mit dem Druckknopf mit einem gegenüberliegenden Grundelement durch Einclipsen verbunden.

Die Montage einer Verdunkelungsvorrichtung im industriellen Maßstab erfolgt im Allgemeinen vom Innenraum des Fahrzeuges aus vor oder nach dem von außen erfolgendem Verkleben der Glasscheibe mit dem oberen Teil der Karosserie. Die eigentliche feste Verbindung erfolgt über eine Tragstruktur, die entweder karosseriefest oder aber fest mit der lichtdurchlässigen Scheibe verbunden ist. Unabhängig davon werden die nach dem Stand der Technik bekannten Verdunkelungsvorrichtungen üblicherweise durch Verschrauben mit der Tragstruktur fest verbunden.

Diese Befestigungstechnik weist jedoch den Nachteil auf, an der Montagelinie des Kraftfahrzeuges beträchtliche Montagezeit zu erfordern. In der Tat erfordert sie den Einsatz mehrerer einzelner aufeinanderfolgender Verschraubungsvorgänge, die im Übrigen vom ergonomischen Standpunkt aus keineswegs optimiert sind. Schlussendlich und unabhängig von dem Gestehungskostenpreis der eigentlichen Verdunkelungsvorrichtung erweisen sich die Montagekosten dieser Art von Ausstattung als viel zu hoch, als dass damit eine gute Entwicklung von Dächern aus Glas auf dem Automobilsektor sichergestellt werden könnte.

Entsprechend ist das durch den Gegenstand der vorliegenden Erfindung zu lösende technische Problem, eine Verdunkelungsvorrichtung für eine in dem Dach eines Kraftfahrzeuges fest montierte lichtdurchlässige Scheibe vorzuschlagen, die an einer mit dem genannten Dach des Kraftfahrzeuges fest verbundenen Tragstruktur Befestigungsmittel umfasst, wobei diese Verdunkelungsvorrichtung es ermöglichen würde, die Probleme nach dem Stand der Technik zu vermeiden und gleichzeitig in der Montage weniger kostspielig zu sein.

Die Lösung des gestellten technischen Problems besteht nach der vorliegenden Erfindung darin, dass die Befestigungsmittel mindestens ein Montageelement umfassen, das bezogen auf die Verdunkelungsvorrichtung abnehmbar montiert ist und das in einem montierten Zustand der Verdunkelungsvorrichtung in die Tragstruktur nach einer im Wesentlichen zur mit der Verdunkelungsvorrichtung verbundenen lichtdurchlässigen Scheibe parallelen Richtung eingeclipst ist.

Es versteht sich, dass entsprechend der üblichen Vorgehensweise der Ausdruck "Einclipsen" ganz umfassend jede beliebige Montagetechnik durch Verformen umfasst, die geeignet ist , eine im Wesentlichen steife und lösbare Verbindung herzustellen. Dies betrifft genauer gesagt jedes Einrasten mit elastischer Verformung, d. h. jede Kopplung zweier Elemente in im Wesentlichen komplementärer Form miteinander, von denen mindestens eines geeignet ist, sich im Laufe des gegenseitigen Eingreifens elastisch zu verformen Diese Fähigkeit zur Verformung hat zum Ziel, zunächst einmal das eigentliche Einrasten zwischen den im wesentlichen komplementären Montageelementen zu ermöglichen und später ein Blockieren durch Klemmen oder Einrasten zwischen den letztgenannten herbeizuführen, nachdem die Kopplung beendet wurde.

Unabhängig davon ermöglicht die so definierte Erfindung eine stark vereinfachte Montage der Verdunkelungsvorrichtung. Die feste Verbindung im Bereich jedes Montageelements erfolgt in der Tat durch einfaches Einrasten mit elastischer Verformung mit der Tragstruktur. Im Übrigen ist Werkzeug nicht unbedingt erforderlich, um diesen Arbeitsgang durchzuführen.

Das Einclipsen ermöglicht entsprechend eine schnelle Befestigung, die mit dem Verschrauben nach dem Stand der Technik überhaupt nicht zu vergleichen ist, da hier die Blockierung praktisch unmittelbar stattfindet. Insoweit ist der Zeitgewinn bei der Montage umso grösser, als die Mittel zur Befestigung der Verdunkelungsvorrichtung ausschließlich aus erfindungsgemäßen Montageelementen besteht.

Die Montagetechnik durch Einclipsen weist außerdem den Vorteil auf, gleichzeitig an sämtlichen Befestigungspunkten der Verdunkelungsvorrichtung zum Einsatz kommen zu können. Dies ermöglicht eine weitere Reduzierung der Montagezeit und demzufolge der Montagekosten.

Diese Lösung ist im Übrigen durchaus an jeden beliebigen Typ von Verdunkelungsvorrichtungen anpassbar, unabhängig davon, ob sie steife Klappen oder Vorhänge mit Aufrollvorrichtungen sind, ob sie aus einem Stück bestehen oder gelenkig ausgeführt sind. Die vorliegende Erfindung betrifft auch die Merkmale, welche sich aus der folgenden Beschreibung ergeben und welche einzeln in allen möglichen technischen Kombinationen zu berücksichtigen sind.

Diese als nicht einschränkendes Beispiel gegebene Beschreibung macht besser verständlich, aus was die Erfindung besteht und wie sie realisiert werden kann. Sie wird im Übrigen unter Bezugnahme auf die beigefügten Zeichnungen gegeben, in denen
Fig. 1 eine Ansicht von unten mit der Darstellung einer erfindungsgemäßen Verdunkelungsvorrichtung ist;
Fig. 2 im Detail einen Teil der Verdunkelungsvorrichtung zeigt, an dem ein Montageelement entsprechend einer Ausführungsform der Erfindung montiert werden soll;
Fig. 3 in der Perspektive von oben die Elemente der Fig. 2 nach erfolgter Montage vor der Montage auf einem Tragelement nach der Ausführungsform der Erfindung zeigt;
Fig. 4 eine zur Fig. 3 analoge Ansicht nach Fertigstellung der Montage auf dem Tragelement zeigt;
Fig. 5 einen Längsschnitt nach einem zu der in Fig. 4 gezeigten Montage im Wesentlichen entgegensetzten Gesichtwinkel bildet;
Fig. 6 im Detail einen Teil der Verdunkelungsvorrichtung zeigt, an dem ein Montageelement entsprechend einer weiteren Ausführungsform montiert werden soll;
Fig. 7 in der Perspektive von oben die Elemente der Fig. 6 nach erfolgter Montage vor der Montage auf einem Tragelement nach der weiteren Ausführungsform zeigt;
Fig. 8 eine zur Fig. 7 analoge Ansicht nach Fertigstellung der Montage auf dem Tragelement zeigt.

Aus Gründen der Klarheit werden die jeweils gleichen Bestandteile mit identischen Bezugszeichen bezeichnet. Des Weiteren werden lediglich die für das Verständnis der Erfindung wesentlichen Bestandteile dargestellt, wobei dies auch nicht maßstabsgerecht und nur in schematischer Form erfolgte.

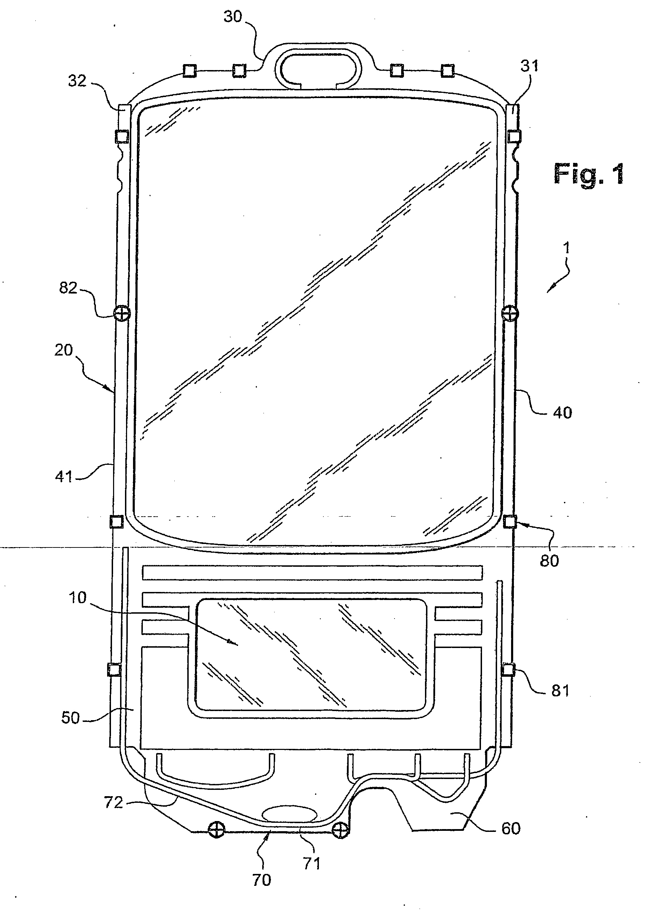

Fig. 1 zeigt eine Verdunkelungsvorrichtung 1, die dazu bestimmt ist, unter einem fest im Dach einer Karosserie eines Kraftfahrzeuges montierten, aus Glas bestehenden Scheibe fest verbunden zu werden.

Bei dieser besonderen, lediglich als Beispiel gewählten Ausführungsform wird die Verdunkelungsfunktion durch mehrere steife Klappen 10 sichergestellt, die in der Weise für die Verschiebung beweglich montiert sind, dass sie parallel zur Innenfläche der Glasscheibe ausgefahren werden können. Diese Beweglichkeit wird zwischen einer geschlossenen Position und einer offenen Position ausgeübt, bei der die steifen Klappen 10 jeweils den direkt unter der Glasscheibe gelegenen Raum abzudunkeln bzw. freizugeben vermögen.

Wie in der genannten Fig. 1 zu sehen ist, hat die Verdunkelungsvorrichtung 1 in an sich bekannter Weise die Form eines Rahmens 20, in dessen Innerem die steifen Klappen 10 in der Längsrichtung gleitend montiert sind. Der genannte Rahmen 20 besteht schematisch aus einer vorderen Strebe 30, aus zwei seitlichen Führungsschienen 40, 41, aus einem Aufnahmegehäuse 50 und einer hinteren Strebe 60.

Wie der Name sagt, stellt die vordere Strebe 30 die Steifigkeit des gesamten Vorderteils der Verdunkelungsvorrichtung in Querrichtung sicher. Ihre Enden 31, 32, die jeweils mit den beiden Führungsschienen 40, 41 fest verbunden sind, sind in der Weise ausgestaltet, dass sie Anschläge bilden, welche das Gleiten der steifen Klappen 10 nach vorne zu blockieren vermögen.

Die beiden Führungsschienen 40, 41 erstrecken sich ihrerseits in Längsrichtung im Bereich der seitlichen Kanten der Verdunkelungsvorrichtung 1 zwischen der vorderen Strebe 30 und dem hinten positionierten Aufnahmegehäuse 50. Ihre Hauptfunktion ist es, die Führung der steifen Klappe 10 sicherzustellen, wenn letztere zwischen der geschlossenen Position und der offenen Position gleiten. Aber sie stellen auch die Halterung der genannten steifen Klappen 10 sicher, wenn letztere in der geschlossenen Position bzw. in einer beliebigen teilweise Öffnungsstellungen befindlich sind.

Das Aufnahmegehäuse 50 ist dazu bestimmt, die steifen Klappen 10 aufzunehmen, wenn letztere in der geöffneten Stellung übereinander gestapelt sind. Es ist fest mit den hinteren Enden der Führungsschienen 40, 41 verbunden, mit denen es direkt zusammenwirkt, um das Passieren der steifen Klappen 10 zu ermöglichen.

Die hintere Strebe 60, die mit dem Aufnahmegehäuse 50 fest verbünden ist, trägt ihrerseits Motormittel 70, die die Aufgabe haben, die Verschiebung der steifen Klappen 10 sicherzustellen. In an sich bekannter Weise weisen die Motormittel 70 einen Elektromotor 71 auf, der mit Antriebsseilen 72 gekoppelt ist, die ihrerseits mit der vordersten steifen Klappe 10 über klassische Systeme von Umlenkrollen oder klassische Systeme von Führungskanälen verbunden sind. Da das Ganze an sich vollständig bekannt ist, wird es hier nicht weiter beschrieben.

Die Verdunkelungsvorrichtung 1 ist außerdem mit Mitteln 80 versehen, die dazu bestimmt sind, ihre Befestigung an einer Tragstruktur 90 zu ermöglichen, die mit dem Dach des Kraftfahrzeuges fest verbunden ist. Die genannte Tragstruktur 90 ist im konkreten Fall hier direkt in die Karosserie des genannten Kraftfahrzeuges integriert.

Entsprechend dem Gegenstand der vorliegenden Erfindung weisen die Befestigungsmittel 80 mehrere Montageelemente 81 auf, welche abnehmbar montiert sind und welche dazu geeignet sind, sich in die Tragstruktur nach einer im Wesentlichen zur mit der Verdunkelungsvorrichtung 1 verbundenen lichtdurchlässigen Scheibe parallelen Richtung einzuclipsen.

Es ist jedoch anzumerken, dass bei diesem Ausführungsbeispiel die Befestigungsmittel 80 nicht allein aus den Montageelementen 81 nach der Erfindung bestehen. Punkte zur Befestigung durch Verschrauben 82 sind ebenfalls vorgesehen, um die Wirkung des Einclipsens insbesondere in dem schwersten Teil der Verdunkelungsvorrichtung 1, nämlich dem hinteren Teil, der in der geöffneten Stellung die Motoren 70 und die steifen Klappen 10 trägt, zu vervollständigen.

Ebenfalls in Fig. 1 ist zu bemerken, dass die Montageelemente 81 ausreichend gut verteilt sind, um vorübergehend die Verdunkelungsvorrichtung 1 allein halten zu können, was es so in vorteilhafter Weise ermöglicht, vor der endgültigen Befestigung durch Verschrauben eine Art Vormontage durchzuführen. Im Übrigen ist zu bemerken, dass die Befestigungspunkte durch Verschrauben 82 ebenfalls in der Weise verteilt sind, dass eine im Wesentlichen gleichmäßige Befestigung der Verdunkelungsvorrichtung 1 an der Tragstruktur 90 garantiert wird.

Natürlich wäre gleichwohl eine ausschließlich mit einclipsbaren Montageelementen 81 ausgeführte Befestigung durchaus denkbar, dies umso mehr als die so erhaltene Ausgestaltung hinsichtlich der Montagezeiten vergleichsweise noch vorteilhafter wäre.

Nach einer derzeit bevorzugten Ausführungsform der Erfindung ist jedes Montageelement 81 hier elastisch verformbar.

Es ist bekannt, dass eine Verbindung durch Einclipsen darin besteht, ein Einrasten zweier Elemente von im Wesentlichen komplementären Formen auszuführen, von denen mindestens eines elastisch verformbar ist. Die für die Ausführung dieser Art von Befestigung unerlässliche Fähigkeit zur Verformung kann in gleicher Weise durch die Montageelemente 81, durch den damit verbundenen Teil der Tragstruktur 90 oder durch beide gleichzeitig bereitgestellt werden.

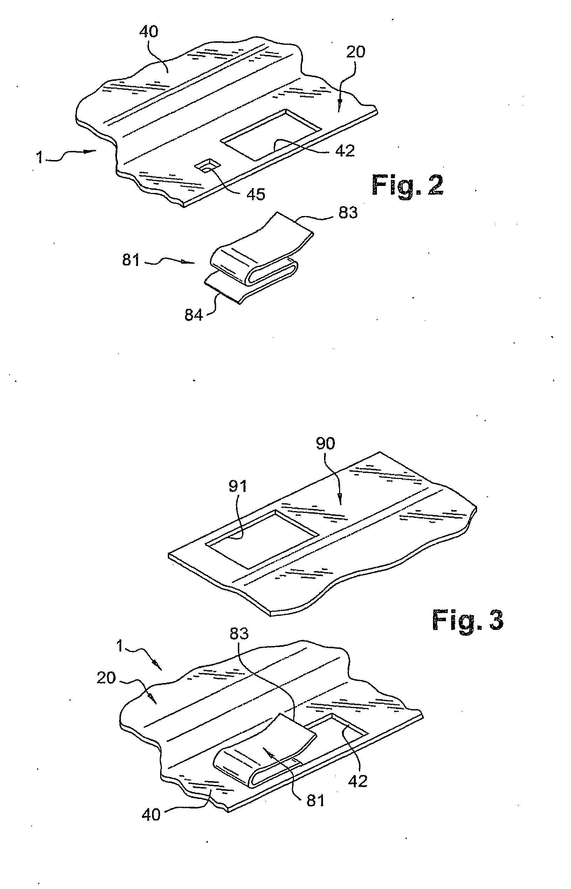

Eine Ausgestaltung, die eine vollständig steife Tragstruktur 90 und elastisch verformbare Montageelemente 81 kombiniert, hat jedoch eine Reihe von Vorteilen. Sie ermöglicht zunächst, die Solidität der genannten Tragstruktur 90 nicht in Frage zu stellen, die also entsprechend ihre Rolle als stabiler Träger voll wahrnehmen kann, aber eine solche Ausgestaltung ermöglicht es auch, die a priori empfindlichsten Elemente, nämlich die elastisch verformbaren Montageelemente 81 auf dem abnehmbaren Teil, also dem am leichtesten zu reparierenden Teil des Systems, d.h. also der Verdunkelungsvorrichtung 1, zusammenzufassen. Die Figuren 2 bis 5 zeigen eine Ausführungsform der Erfindung, die insbesondere insofern bemerkenswert ist, als das Montageelement 81 hier in der Lage ist, sich in die Tragstruktur 90 in einer im Wesentlichen zu der lichtdurchlässigen Scheibe, die mit der Verdunkelungsvorrichtung 1 verbunden ist, parallelen Richtung einzuclipsen.

Diese Ausgestaltung bietet den Vorteil, dass sie im Aufbau einfach zu verwirklichen bzw. einzusetzen ist. Sie ermöglicht auch, in optimaler Weise die Höhe der Verdunkelungsvorrichtung 1 zugunsten der Kopffreiheit des Kraftfahrzeuges zu minimieren.

Nach einem besonders vorteilhaften Erfindungsmerkmal ist das Montageelement 81 relativ zur Verdunkelungsvorrichtung (Fig. 2) abnehmbar montiert.

Diese Eigenschaft ermöglicht es, jedes eventuelle Bruchproblem im Bereich des empfindlichsten Werkstücks der Montageeinheit, d. h. also des Montageelements 81, extrem einfach zu beheben. Da dieses Werkstück unabhängig und in abnehmbarer Weise montiert ist, kann es leicht ausgetauscht werden. Dieses Merkmal ist bei jeder Kundendienstarbeit von Interesse, die ein Abnehmen und Neumontieren der Verdunkelungsvorrichtung 1 erfordert.

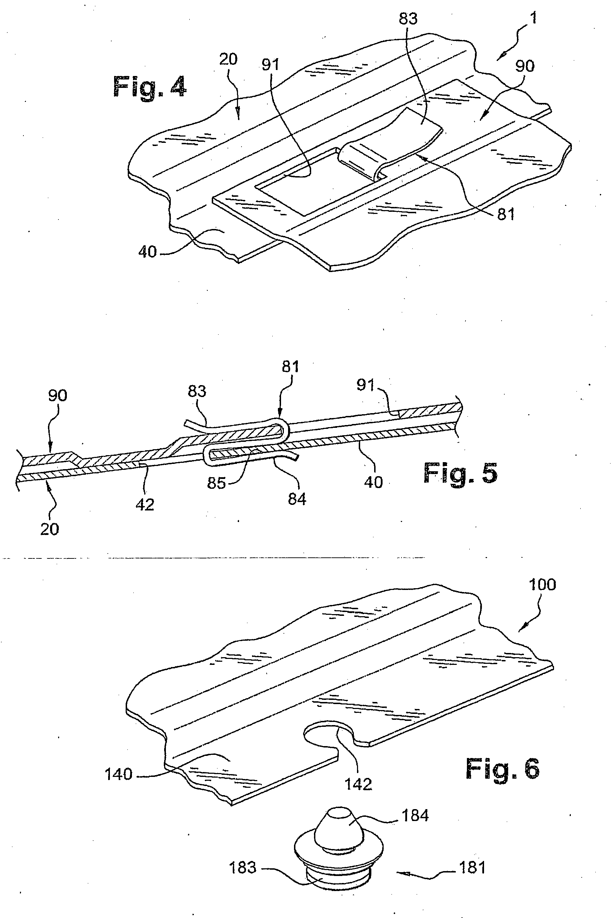

In besonders vorteilhafter Weise ist das abnehmbare Montageelement 81 mit der Verdunkelungsvorrichtung 1 durch Einclipsen verbunden (Figuren 3 und 5).

Obwohl jede reversible Montagetechnik a priori in äquivalenter Weise verwendet werden kann, stellt das Einclipsen aufgrund seiner Einfachheit und seiner schnellen Ersetzbarkeit, aber auch wegen seiner Zuverlässigkeit eine zu bevorzugende Lösung dar.

Wie am deutlichsten in den Figuren 2 und 5 zu sehen ist, wird das Montageelement 81 dieser Ausführungsform durch eine zangenartige Klammer gebildet.

Dieses Werkstück ist nach dem Stand der Technik sowohl vom strukturellen als auch vom funktionellen Standpunkt aus an sich gut bekannt und wird deshalb hier nicht weiter beschrieben. Es wird lediglich angegeben, dass das Montageelement 81 schematisch eine S-Form aufweist, deren beiden freie elastisch verformbare Zungen 83, 84 bildende Enden sich in entgegengesetzten Richtungen erstrecken.

Nach einer Besonderheit dieser Ausführungsform der Erfindung ist das Montageelement 81 in der Lage, steif und fest mit der Verdunkelungsvorrichtung 1 (Figuren 3 bis 5), aber auch mit der Tragstruktur 90 mit einem Positionierungsspiel verbunden zu werden, das in einer Ebene stattfindet, die im Wesentlichen zu der mit der Verdunkelungsvorrichtung 1 verbundenen lichtdurchlässigen Scheibe parallel ist.

Dieses Merkmal verleiht dem Montageelement 81 relativ zur Tragstruktur 90 eine gewisse Positionierungsfreiheit. Diese Freiheit ist zwar wohl örtlich beschränkt, aber sie ist ausreichend, um die Position der Verdunkelungsvorrichtung 1 relativ zur Tragstruktur 90 justieren zu können. Dies ermöglicht es insbesondere, eventuelle Probleme von sich kumulierenden Maßungenauigkeiten zu überwinden. Bei dem Ausführungsbeispiel nach den Figuren 2 bis 5 beginnt die Verbindung der Verdunkelungsvorrichtung 1 auf der Tragstruktur 90 mit der Bereitstellung der Montageelement 81. Wie in Fig. 2 zu sehen ist, wird eine Verankerungsbohrung 42 eigens dafür in der Führungsschiene 40 angebracht, um sieaufzunehmen. Die genannte Bohrung 42 in rechteckiger Form hat im Wesentlichen komplementäre Abmessungen zu denjenigen der elastisch verformbaren Zunge 84, um das rechtwinkelige Eingreifen der zangenartigen Klammer 81 in die Führungsschiene 40 zu erlauben (Fig. 2). Nach Durchführung dieses Arbeitsganges wird das Montageelement 81 an einem der die Verankerungsbohrung 42 begrenzenden Ränder durch einfache Translation nach einer zu diesem Teil der Führungsschiene 40 koplanaren Richtung eingeclipst (Fig. 3).

Das Ganze kann dann mit der Tragstruktur 90 fest verbunden werden, indem in im Wesentlichen analoger Weise vorgegangen wird, wie dies im Rahmen der festen Verbindung der Montageelement 81 an der Führungsschiene 40 ausgeführt wurde. Entsprechend und nach den Figuren 3 und 4 wird eine Verankerungsbohrung 91 in der Tragstruktur 90 angebracht, um das rechtwinkelige Eingreifen der elastisch verformbaren Zunge 83 zu ermöglichen und somit das Montageelement 81 aufnehmen zu können. Wenn dieser Arbeitsgang abgeschlossen ist, wird die zangenartige Klammer 81 auf die die Verankerungsbohrung 91 begrenzenden Ränder durch einfache Translation (Fig. 3) nach einer zu diesem Teil der Tragstruktur 90 koplanaren Richtung eingeclipst. Damit ist die Montage vollständig abgeschlossen.

Anzumerken ist, dass die zangenartige Klammer 81 über einen Verriegelungszapfen 85 starr mit der Führungsschiene 40 verbunden wird, der in eine in adäquater Weise in unmittelbarer Nähe der Verankerungsbohrung 42 (Fig. 2) angeordnete Positionierungsbohrung 45 eingreifen kann, nachdem die zangenartige Klammer 81 korrekt eingeclipst wurde (Figuren 4 und 5).

Im Gegensatz dazu wird das Montageelement 81 mit der Tragstruktur 90 durch einfaches Klemmen ihrer Zunge 83 fest verbunden, was es ermöglicht, in einer im Wesentlichen zur mit der Verdunkelungsvorrichtung 1 verbundene lichtdurchlässigen Scheibe parallelen Ebene über ein Positionierungsspiel zu verfügen.

Die Figuren 6 bis 8 zeigen eine weitere Ausführungsform, in der das Montagelement 181 in der Lage ist, sich nach einer im Wesentlichen zu der mit der Verdunkelungsvorrichtung 100 verbundenen lichtdurchlässigen Scheibe rechtwinkeligen Richtung in die Tragstruktur 190 einzuclipsen.

Wie bei der vorstehend beschriebenen ersten Ausführungsform wird das Montageelement 181 relativ zur Verdunkelungsvorrichtung 100 abnehmbar montiert. Im konkreten Fall wird es ebenfalls durch Einclipsen fest verbunden.

Wie insbesondere aus Fig. 6 ersichtlich ist, wird das Montageelement 181 im Wesentlichen durch einen Druckknopf gebildet.

Diese Art Werkzeug ist nach dem Stand der Technik sowohl vom strukturellen als auch vom funktionellen Standpunkt aus an sich gut bekannt und wird deshalb hier nicht weiter beschrieben. Es wird lediglich angegeben, dass das Montageelement 181 schematisch eine ringförmige Auskehlung 183 sowie ein konisches elastisch verformbares Ende 184 aufweist. Das abnehmbare Montageelement 181 ist in der Lage, fest mit der Tragstruktur 190 verbunden zu werden, aber auch dazu, mit der Verdunkelungsvorrichtung 100 mit einem Positionierungsspiel verbunden zu werden, das in einer Ebene stattfindet, die im Wesentlichen zu der lichtdurchlässigen Scheibe parallel ist, die mit der Verdunkelungsvorrichtung 100 verbunden ist.

Dieses Merkmal verleiht dem Montageelement 181 relativ zur Verdunkelungsvorrichtung 100 eine gewisse Positionierungsfreiheit. Diese Freiheit ist zwar örtlich beschränkt, aber sie ist ausreichend, um die Position der Verdunkelungsvorrichtung 100 relativ zur Tragstruktur 190 justieren zu können. Dies ermöglicht es insbesondere, eventuelle Probleme von sich kumulierenden Maßungenauigkeiten zu überwinden.

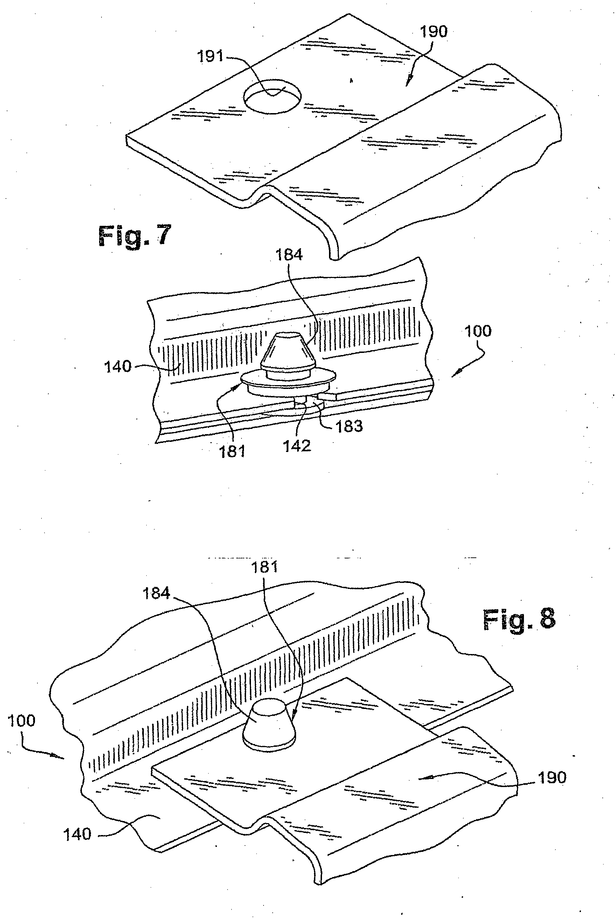

Bei dem Ausführungsbeispiel nach den Figuren 6 bis 8 beginnt die feste Verbindung der Verdunkelungsvorrichtung 100 auf der Tragstruktur 190 mit der Bereitstellung des Druckknopfes 181. Wie in Fig. 6 zu sehen ist, wird eine Verankerungsaufnahme 142 eigens dafür in der Führungsschiene 140 angebracht, um ihn aufzunehmen. Die genannte Aufnahme 142 in Form eines Schlüsselloches ist in der Weise dimensioniert, dass der Druckknopf 181 in Querrichtung auf der Höhe seiner ringförmigen Auskehlung 183 eingeclipst werden kann (Fig. 7).

Das Ganze kann dann mit der Tragstruktur 190 fest verbunden werden. Dafür bzw. entsprechend Fig. 7 wird eine Verankerungsbohrung 191 durch die Tragstruktur 190 angebracht. Das Ganze ist so dimensioniert, dass das konische Ende 184 des Möntageelementes 181 axial in die Verankerüngsbohrung 181 eingeclipst werden kann (Fig. 8). Bei dieser Ausführungsform ist anzumerken, dass der Druckknopf 181 fest, d.h. also ohne Positionierungsspiel im Bereich den Verankerungsbohrung 191, mit seiner Tragstruktur 190 verbunden wird.

Dies ist.dagegen ganz und gar nicht der Fall hinsichtlich der Verbindung zwischen dem Montageelement 181 und der Führungsschiene 140, da es ganz wesentlich ist, über ein bestimmtes Positionierungsspiel verfügen zu können, um das ordnungsgemäße Zentrieren der Verdunkelungsvorrichtung 100 relativ zur Tragstruktur 190 sicherzustellen.

Es ist klar, dass es durchaus möglich ist, mehrere Arten von Montageelementen 81, 181 an ein und derselben Verdunkelungsvorrichtung 1, 100 zu kombinieren. Es wird hier insbesondere an Verdunkelungsvorrichtungen mit Gelenken gedacht, die in der Drehung beweglich montierte Aufnahmegehäuse aufweisen.. Bei einer solchen Ausführungsform können die Führungsschienen beispielsweise zangenförmige Klammern aufweisen, die in einer im Wesentlichen zu der damit verbundenen Glasscheibe parallelen Richtung eingeclipst werden können, während das Aufnahmegehäuse mit Druckknöpfen ausgestattet sein kann, die in einer im Wesentlichen zu der genannten Glasscheibe rechtwinkeligen Richtung eingeclipst werden können.

Nach einer besonders vorteilhaften Ausführungsform der Erfindung kann die Verdunkelungsvorrichtung 1 weitere zusätzliche Elemente in der Weise aufweisen, dass eine Art vormontiertes Modul gebildet wird. Insbesondere wird hier an Dachhimmelausstattungen, Haltegriffe, Sonnenblenden, Innenbeleuchtungen usw. gedacht. Natürlich betrifft die Erfindung auch ganz allgemein ein Kraftfahrzeug, das mit mindestens einer Verdunkelungsvorrichtung wie vorstehend beschrieben ausgestattet ist.

## Patentansprüche

1. Verdunkelungsvorrichtung (1) einer in einem Dach eines Kraftfahrzeuges fest montierten lichtdurchlässigen Scheibe, wobei die Verdunkelungsvorrichtung (1) in einer mit dem Dach des Kraftfahrzeuges fest verbundenen Tragstruktur (90) Befestigungsmittel (80) aufweist , **dadurch gekennzeichnet, dass** die Befestigungsmittel (80) mindestens ein Montageelement (81) aufweisen, das bezogen auf die Verdunkelungsvorrichtung (1) abnehmbar montiert ist und das in einem montierten Zustand in die Tragstruktur (90) nach einer im Wesentlichen zur mit der Verdunkelungsvorrichtung (1) verbundenen lichtdurchlässigen Scheibe parallelen Richtung eingeclipst ist.

2. Verdunkelungsvorrichtung (1) nach Anspruch 1, **dadurch gekennzeichnet, dass** das Montageelement (81) elastisch verformbar ist.

3. Verdunkelungsvorrichtung (1) nach einem der Ansprüche 1 oder 2, **dadurch gekennzeichnet, dass** das abnehmbare Montageelement (81) mit der Verdunkeluhgsvorrichtung (1) durch Einclipsen fest verbunden ist.

4. Verdunkelungsvorrichtung (1) nach einem der Ansprüche 1 bis 3, **dadurch gekennzeichnet, dass** das abnehmbare Montageelement (81) geeignet ist, einerseits mit der Verdunkelungsvorrichtung (1) steif und fest verbunden zu werden und andererseits mit der Tragstruktur (90) mit einem Positionierungsspiel fest verbunden zu werden, das in einer Ebene stattfindet, die im Wesentlichen zu der mit der Verdunkelungsvorrichtung (1) verbundenen lichtdurchlässigen Scheibe parallel ist.

5. Verdunkelungsvorrichtung (1) nach einem der Ansprüche 1 bis 4, **dadurch gekennzeichnet, dass** das Montageelement (81) durch eine zangenförmige Klammer gebildet ist.

6. Verdunkelungsvorrichtung (1) nach einem der Ansprüche 1 bis 5, **dadurch gekennzeichnet, dass** sie mindestens ein Element aufweist, das unter Dachhimmelausstattungen, Haltegriffen, Sonnenblenden, Innenbeleuchtungen ausgewählt ist.

7. Kraftfahrzeug, **dadurch gekennzeichnet, dass** es mindestens eine Verdunkelungsvorrichtung (1) nach einem der vorstehenden Patentansprüche aufweist.

## Claims

1. Sunshade (1) for a transparent pane fixedly mounted in a roof of a motor vehicle, wherein the sunshade (1) has fastening means (80) in a supporting structure (90) connected fixedly to the roof of the motor vehicle, **characterized in that** the fastening means (80) have at least one mounting element (81) which is mounted removably with respect to the sunshade (1) and which, in a mounted state, is clipped into the supporting structure (90) in a direction substantially parallel to the transparent pane connected to the sunshade (1).

2. Sunshade (1) according to Claim 1, **characterized in that** the mounting element (81) is elastically deformable.

3. Sunshade (1) according to either of Claims 1 and 2, **characterized in that** the removable mounting element (81) is fixedly connected to the sunshade (1) by clipping in.

4. Sunshade (1) according to one of Claims 1 to 3, **characterized in that** the removable mounting element (81) is suitable, firstly, to be stiffly and fixedly connected to the sunshade (1) and, secondly, to be fixedly connected to the supporting structure (90) with a positioning play which takes place in a plane which is substantially parallel to the transparent pane connected to the sunshade (1).

5. Sunshade (1) according to one of Claims 1 to 4, **characterized in that** the mounting element (81) is formed by a pincer-shaped clip.

6. Sunshade (1) according to one of Claims 1 to 5, **characterized in that** the sunshade has at least one element which is selected from among roof lining fittings, grab handles, sun visors or interior lights.

7. Motor vehicle, **characterized in that** the motor vehicle has at least one sunshade (1) according to one of the preceding patent claims.

## Revendications

1. Dispositif d'obscurcissement (1) d'une vitre transparente montée de façon fixe dans un toit d'un véhicule automobile, dans lequel le dispositif d'obscurcissement (1) présente des moyens de fixation (80) dans une structure portante (90) assemblée de façon fixe au toit du véhicule automobile, **caractérisé en ce que** les moyens de fixation (80) présentent au moins un élément de montage (81), qui est monté de façon amovible par rapport au dispositif d'obscurcissement (1) et qui, dans un état monté, est encliqueté dans la structure portante (90) suivant une direction essentiellement parallèle à la vitre transparente reliée au dispositif d'obscurcissement (1).

2. Dispositif d'obscurcissement (1) selon la revendication 1, **caractérisé en ce que** l'élément de montage (81) est déformable élastiquement.

3. Dispositif d'obscurcissement (1) selon l'une des revendications 1 ou 2, **caractérisé en ce que** l'élément de montage amovible (81) est assemblé de façon fixe au dispositif d'obscurcissement (1) par encliquetage.

4. Dispositif d'obscurcissement (1) selon l'une quelconque des revendications 1 à 3, **caractérisé en ce que** l'élément de montage amovible (81) convient d'une part pour être assemblé de façon rigide et fixe au dispositif d'obscurcissement (1) et d'autre part pour être assemblé de façon fixe à la structure portante (90) avec un jeu de positionnement, qui se produit dans un plan qui est essentiellement parallèle à la vitre transparente reliée au dispositif d'obscurcissement (1).

5. Dispositif d'obscurcissement (1) selon l'une quelconque des revendications 1 à 4, **caractérisé en ce que** l'élément de montage (81) est formé par une attache en forme de pince.

6. Dispositif d'obscurcissement (1) selon l'une quelconque des revendications 1 à 5, **caractérisé en ce qu'**il présente au moins un élément, qui est choisi parmi des équipements de ciel de toit, des poignées pour passager, des pare-soleil, des éclairages intérieurs.

7. Véhicule automobile, **caractérisé en ce qu'**il présente au moins un dispositif d'obscurcissement (1) selon l'une quelconque des revendications précédentes.
